# EUROPEAN PATENT SPECIFICATION

(11) **EP 4 129 835 B1**
(45) Date of publication and mention of the grant of the patent: **16.04.2025**
(21) Application number: 20927158.4
(22) Date of filing: 15.12.2020
(51) Int. Cl.: B64G 1/28, B64G 1/10, B64G 1/24

(54) **OFFSET-APPLIED MOMENTUM DUMP METHOD FOR SATELLITE REACTION WHEEL**
OFFSET-ANGEBRACHTES IMPULSABLADEVERFAHREN FÜR EIN SATELLITENREAKTIONSRAD
PROCÉDÉ DE DÉSATURATION CINÉTIQUE APPLIQUÉ PAR DÉCALAGE POUR ROUE DE RÉACTION DE SATELLITE

(30) Priority: 25.03.2020 KR 20200036120
(43) Date of publication of application: 08.02.2023
(73) Proprietor: Korea Aerospace Research Institute, Daejeon 34133 (KR)
(72) Inventor: YOON, Hyung Joo, Sejong-si 30126 (KR); PARK, Young Woong, Daejeon 35265 (KR)
(74) Representative: Frick, Robert
(86) International application number: PCT/KR2020/018340
(87) International publication number: WO 2021/194051

(56) References cited:
- JP-A- 2000 211 598
- KR-A- 20060 005 456
- KR-A- 20100 020 218
- KR-B1- 100 819 131
- KR-B1- 100 819 131
- US-A- 5 123 617
- US-A1- 2014 138 491
- US-B1- 7 198 232
- US-B1- 7 198 232
- BRETT A SMITH ET AL: "Managing momentum on the dawn low thrust mission", AEROSPACE CONFERENCE, 2009 IEEE, IEEE, PISCATAWAY, NJ, USA, 7 March 2009 (2009-03-07), pages 1 - 8, XP031450287, ISBN: 978-1-4244-2621-8

## Description

### [Technical Field]

The present disclosure relates to a momentum dump method for a satellite reaction wheel, and more particularly, to an offset-applied momentum dump method for a satellite reaction so that a momentum dump can be performed more efficiently in the satellite.

### [Background Art]

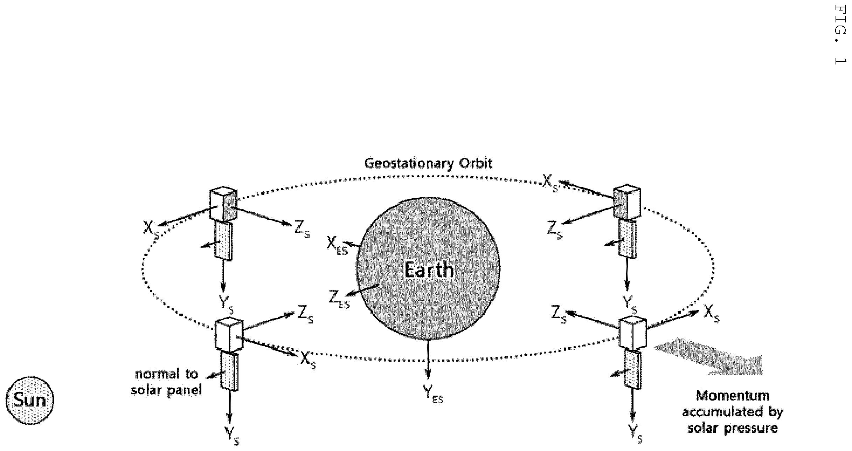

A satellite is subjected to various disturbances from the outside. In particular, in the case of a geostationary orbit satellite, a torque generated as a solar radiation pressure continuously acts on a solar panel of the satellite is a main disturbance factor. FIG. 1 illustrates the effect of the solar radiation pressure according to a revolution of the geostationary orbit satellite. As illustrated, a Zs axis of the satellite always faces the earth, whereas the solar panel always faces the sun. In this case, since the solar radiation pressure acts on the solar panel, the solar panel continuously receives a force in one direction, and accordingly, angular momentum, that is, momentum (on a Xs/Zs plane of the satellite in FIG. 1), is accumulated at a constant rate in a direction perpendicular (Xes axis in FIG. 1) to the earth/sun direction.

Meanwhile, the satellite is provided with an actuator for attitude control, and representative examples thereof include a thruster and a reaction wheel. The thruster is a device that controls attitude by injecting fuel. In other words, the thruster is an external momentum exchange device type, and can change the momentum of the entire satellite, but cannot perform ultra-precision attitude control of the entire satellite. The reaction wheel is a device that controls attitude by turning a wheel with a motor. In other words, the reaction wheel is an internal momentum exchange device type, and cannot change the momentum of the entire satellite, but enables ultra-precise attitude control of the entire satellite.

As described above, when the attitude of the satellite is controlled to continuously maintain the earth-oriented attitude with the reaction wheel while a disturbance torque by the solar radiation pressure is continuously acting, the momentum is accumulated in the Xes axis direction by the disturbance torque, and stored in the reaction wheel. Reducing the momentum stored in such a reaction wheel is called a momentum dump. When the momentum dump is not performed at an appropriate cycle, the speed of the reaction wheel reaches a maximum speed limit or the rotation direction is changed and the speed temporarily becomes 0 (zero speed, zero-crossing). When the reaction wheel reaches the maximum speed limit, it becomes impossible to perform attitude control because it can no longer generate torque in the rotational direction. On the other hand, when the reaction wheel reaches the zero speed, static friction is applied to a bearing to temporarily affect the precise attitude control of the satellite, so the performance of missions such as ground observation is impeded and the lubrication action of the bearing is not smooth, resulting in affecting characteristics and life of the bearing.

For this reason, the conventional geostationary orbit satellite has been made to periodically perform the process of dumping the momentum stored in the reaction wheel mainly by using a thruster. This process is called the momentum management of the geostationary orbit satellite, and there are several factors to consider in the momentum management as follows.

First, the momentum capacity of the reaction wheel needs to be considered. As a wheel with a large momentum capacity is used, the time it takes for the speed of the reaction wheel to reach the maximum speed limit or the zero speed may be delayed, but there is a problem of increasing the weight and price.

Second, the number and arrangement direction of reaction wheels should be considered. For three-dimensional attitude control, at least three reaction wheels are required to perform a linear span of a three-dimensional space. However, in practice, it is common to use 4 or more reaction wheels to prepare for failure. In this case, as a large number of reaction wheels are used, the total momentum capacity of the reaction wheels increases, but there is also a problem of increasing the weight and price. In addition, even if the same number of reaction wheels are used, the three-dimensional momentum capacity generated by all the reaction wheels varies depending on which direction the reaction wheels are arranged.

Third, the cycle and schedule of the momentum dump should be considered. The more frequently the momentum dump using the thruster is performed, the more it is possible to prevent the speed of the reaction wheel from reaching the maximum speed limit or the zero speed in advance. However, during the momentum dump using the thruster, the precise attitude control of the satellite cannot be maintained and the mission performance needs to be paused, and when the momentum dump cycle using the thruster is too short, there is a problem in that the mission performance efficiency decreases. In addition, when the dump is performed at the same local time every time, only a specific thruster is mainly used, which adversely affects the operation of the device.

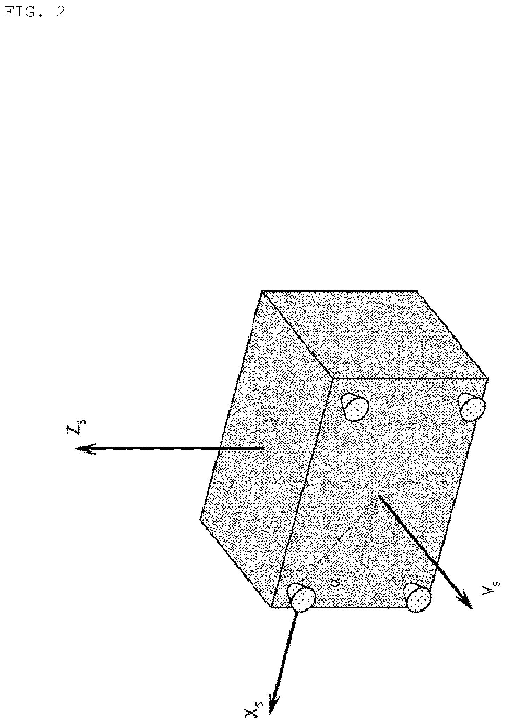

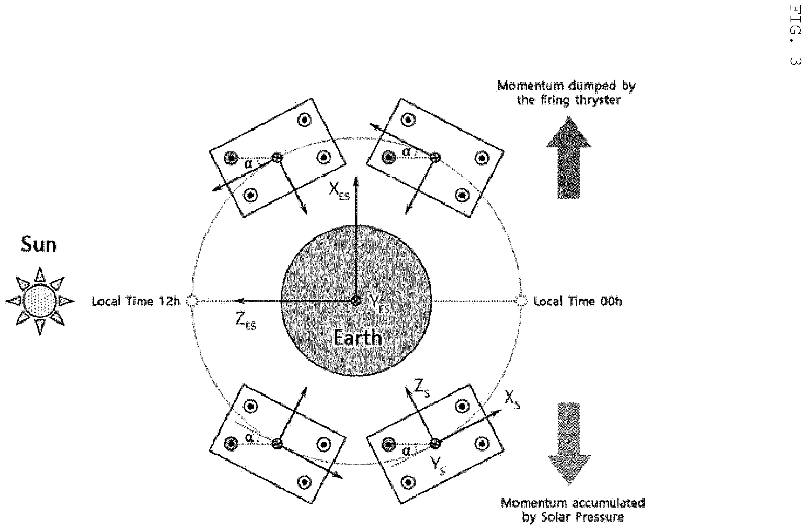

Among these various considerations, the cycle and schedule of the momentum dump will be described in more detail as follows. FIG. 2 illustrates an embodiment in which four thrusters are arranged on the Ys-axis plane of the satellite, and FIG. 3 illustrates an embodiment of a thruster-based momentum dump scenario for the satellite in which the thruster is disposed as illustrated in FIG. 2. As in the description of FIG. 1, the solar panel is installed in a Ys-axis direction of a fuselage in the satellite of this embodiment, and thus, the external torque is continuously applied by the solar radiation pressure. In order to maintain the earth-oriented attitude against the action of the external torque, the momentum (angular momentum) is accumulated and stored in the reaction wheel responsible for the attitude control, and the stored momentum is appropriately dumped using the thruster. Since it is well known that it is most efficient to perform the momentum dump when the thruster is located farthest from the Ys axis of the fuselage in the sun direction, in the case of FIG. 3, it is efficient to perform the momentum dump at local times 6-α/15, 6+α/15, 18-α/15, and 18+α/15, respectively, according to the respective positions on the fuselage of thrusters #1 to 4. Although the number of thrusters is different in the Chollian 2A satellite, which is developed and currently under the supervision of the Korea Aerospace Research Institute, the same method in principle as the momentum compensation maneuvering technique has been used. The momentum management is described in more detail in the Chollian 2A satellite, "Chollian 2A Orbital Maintenance Maneuvering and Wheel Momentum Offloading Performance Analysis" (Hyung-Joo Yoon, Young-Woong Park, Dae-Kwan Kim, Geun-Ju Park, Proceedings of the 2019 Spring Conference of the Korean Society of Aeronautics and Space Sciences, 2019, 'Prior Document 1'). According to Prior Document 1, the Chollian 2A is operated to perform the momentum dump once a day (24 hours), and the local time for performing the momentum dump is changed every few months to use the same thruster as possible. It is known that it is possible to obtain a result of satisfying the requirements that the reaction wheel does not reach the maximum continuous speed and the zero speed by the momentum management.

In this way, the cycle and schedule of the momentum dump are determined to perform the momentum dump cyclically once a day, and thus, the satellite equipped with the reaction wheel whose momentum capacity and number are appropriately determined to digest the accumulated momentum due to the disturbance torque according to the solar radiation pressure for 24 hours is currently being successfully operated. However, there are always variables that may lead to unpredictable situations. For example, when the situation where the urgent and high-priority mission performance is required lasts for an unexpectedly long time (since the momentum dump should not be performed during the mission performance), the momentum may be continuously accumulated for more than 24 hours. Of course, the momentum capacity of the reaction wheel is determined to be digestible even if the momentum is accumulated for more than 24 hours by applying a sufficient safety index, but this method needs to adopt the reaction wheel with larger capacity, which increases the weight and cost of the satellite. Considering this, for example, even in the case of the satellite that is designed to perform the momentum dump in any cycle and is well operated, there is always a need for an improvement plan to improve safety and efficiency by improving the operation method in the same specification.

### [Related Art Document]

US2014/138491 A1.

### [Non-Patent Document]

(Non-Patent Document 1) 1. "Chollian 2A Orbital Maintenance Maneuvering and Wheel Momentum Offloading Performance Analysis" (Hyung-Joo Yoon, Young-Woong Park, Dae-Kwan Kim, Geun-Ju Park, Proceedings of the 2019 Spring Conference of the Korean Society of Aeronautics and Space Sciences, 2019)

### [Disclosure]

### [Technical Problem]

An object of the present disclosure is to provide an offset-applied momentum dump method for a satellite reaction wheel, in which an appropriate offset is applied to an originally designed momentum dump to enable safer and more efficient operation of a satellite.

### [Technical Solution]

In one general aspect, a momentum dump method for a satellite reaction wheel operated to dump momentum as much as a known momentum dump amount according to a predetermined dump cycle may include: an offset application requesting step in which an offset application is requested during the momentum dump to the satellite; and an offset momentum dumping step in which the momentum as much as a predetermined offset dump amount is dumped from the reaction wheel to generate a momentum offset in a direction opposite to a direction in which the momentum is accumulated. In this case, the offset dump amount may be determined as a value smaller than the momentum dump amount.

In addition, the offset-applied momentum dump method for a satellite reaction wheel may be applied during a first operation of the satellite, or may be applied during a normal operation of the satellite.

Specifically, when the momentum dump method for a satellite reaction wheel is applied to the satellite that intends to go into orbit and start an operation, a step of making the momentum stored in the reaction wheel become 0 by performing initial setting to start the operation of the satellite on the orbit, the offset application request step, and the offset momentum dump step may be sequentially performed, so, after a momentum offset is generated in the reaction wheel, the satellite may be operated to dump the momentum as much as the known momentum dump amount according to the predetermined dump cycle.

In addition, when the momentum dump method for a satellite reaction wheel is applied to the satellite in operation to dump the momentum as much as the known momentum dump amount according to the predetermined dump cycle, the offset application request step, a step in which 1 dump cycle being performed at a time when the offset application request step is performed is completed, and thus, the momentum as much as the momentum dump amount is dumped in the reaction wheel so that the stored momentum becomes 0, and the offset momentum dump step may be sequentially performed, so, after a momentum offset is generated in the reaction wheel, the satellite may be operated to dump the momentum as much as the known momentum dump amount according to the predetermined dump cycle.

In addition, the momentum dump method for a satellite reaction wheel may include a method of determining the momentum dump amount, and the method of determining the momentum dump amount may operate any one selected from the satellite, another satellite having the same specification as the satellite, or a satellite simulator designed to be equivalent to the satellite to dump the momentum as much as the known momentum dump amount according to the predetermined dump cycle, and may include a basic momentum accumulation step of accumulating the momentum due to disturbance torque due to solar radiation pressure in the reaction wheel for 1 dump cycle, and a basic dump amount calculation step of calculating the momentum accumulated in the basic momentum accumulation step as the momentum dump amount or determining a value selected from a predetermined momentum dump amount database as the momentum dump amount.

In addition, the momentum dump method may further include, after the offset momentum dump step, a long-term satellite mission performance step of performing the satellite mission without the momentum dump for 1 dump cycle or more after the offset momentum dump step.

In this case, when 1 dump cycle is 24 hours and a long-term satellite mission performance period is 24 hours, the momentum offset may be determined as a value corresponding to the accumulated amount of momentum due to solar radiation pressure for a 1/2 long-term satellite mission performance period, that is, 12 hours.

In addition, when 1 dump cycle is 24 hours and the long-term satellite mission performance period is 36 hours, the momentum offset may be determined as a value corresponding to the accumulated amount of momentum due to solar radiation pressure for a 1/2 long-term satellite mission performance period, that is, 18 hours.

### [Advantageous Effects]

According to the present disclosure, it is possible to enable safer and more efficient operation of a satellite by applying an appropriate offset to an originally designed momentum dump cycle. Specifically, for a satellite designed to perform a momentum dump in a predetermined cycle, as an example, when a reaction wheel is first operated, a momentum of 1/2 cycle is dumped while the wheel speed is 0, thereby making the accumulated momentum of the reaction wheel equal to a non-zero momentum offset. When the momentum is accumulated again in this state, the time when the original momentum dump should be performed may be much later than the time when the original momentum dump should be performed. As described above, according to the present disclosure, by applying the offset to the momentum dump, it is possible to delay the time when the momentum dump is to be performed and perform the satellite mission without the momentum dump for an extended period of time, thereby greatly improving the efficiency of satellite operation.

In addition, according to the present disclosure, by applying the momentum offset to delay the momentum dump time, it is possible to accumulate the momentum for 1 cycle even with a reaction wheel assembly with momentum capacity that is substantially less than that of the original 1 cycle, and thus, it is possible to reduce the weight and cost of the satellite by alleviating the requirements for the momentum capacity of the reaction wheel. In addition, considering this effect in another direction, the offset is applied, and thus, a less load is applied to the reaction wheel as much, so it is possible to reduce the power consumption and extend the life of the reaction wheel, thereby improving the safety of the satellite.

### [BRIEF DESCRIPTION OF THE DRAWINGS]

FIG. 1 is a diagram illustrating an effect of a solar radiation pressure according to a revolution of a geostationary orbit satellite.
FIG. 2 is an embodiment in which four thrusters are installed on a Ys-axis plane of a satellite.
FIG. 3 is a diagram illustrating an embodiment of a thruster-based momentum dump scenario for the satellite in which the thrusters are arranged as illustrated in FIG. 2.
FIG. 4 is a diagram illustrating a conventional momentum dump method and storage momentum of a reaction wheel.
FIG. 5 is a diagram illustrating a momentum dump method and storage momentum of a reaction wheel according to a first embodiment of the present disclosure.
FIG. 6 is a diagram illustrating a momentum dump method and storage momentum of a reaction wheel according to a second embodiment of the present disclosure.

### [Best Mode]

Hereinafter, an offset-applied momentum dump method for a satellite reaction wheel according to the present disclosure having the configuration as described above will be described in detail with reference to the accompanying drawings.

In general, the satellite reaction wheel is operated to dump momentum as much as the momentum dump amount of the known 1 dump cycle amount according to a predetermined dump cycle. That is, momentum is accumulated and stored in the reaction wheel for 1 dump cycle, and the momentum dump is performed immediately after 1 dump cycle, and thus, an operation of making the momentum stored in the reaction wheel become 0 is repeatedly performed. For ease of understanding, for example, when the momentum accumulated in the reaction wheel for 1 dump cycle is 10, a momentum of [0 to 10] is stored in the reaction wheel while an operating time is [0 to 1 dump cycle].

First, the process of determining the momentum dump amount while performing the momentum dump on the satellite reaction wheel will be described step-by-step as follows. When normally operating the satellite, the method for determining the momentum dump amount may include a basic momentum accumulation step and a basic dump amount calculation step. In other words, the determination of the momentum dump amount is made in an operation of operating any one selected from the satellite, another satellite having the same specification as the satellite, or a satellite simulator designed to be equivalent to the satellite to dump the momentum as much as the known momentum dump amount according to the predetermined dump cycle. That is, the "reaction wheel" in the following is to be understood as referring to the reaction wheel included in any one selected from the satellite to which the momentum dump method of the present disclosure is actually applied, another satellite having the same specification as the satellite, or the satellite simulator designed to be equivalent thereto.

In the basic momentum accumulation step, the momentum is accumulated due to the disturbance torque due to the solar radiation pressure in the reaction wheel for 1 dump cycle. In this case, the dump cycle may be appropriately determined as desired according to the purpose or necessity of the user, and may be usually determined to be 24 hours in accordance with the cycle of the rotation of the earth. Of course, it is natural that the dump cycle may be determined differently without limit depending on the satellite mission performance schedule.

In the basic dump amount calculation step, the momentum accumulated in the basic momentum accumulation step may be calculated as the momentum dump amount. That is, the momentum dump amount is determined by the momentum value accumulated by the solar radiation pressure for 1 dump cycle. Alternatively, in the basic dump amount calculation step, a value selected from a predetermined momentum dump amount database may be determined as the momentum dump amount. Although the momentum dump amount has slight variation, the momentum dump amount is a value that converges to an approximately constant value. As described above, the momentum dump amount may be newly measured every dump cycle to be newly determined, but may be determined as a certain specific constant value. However, this value will also appear to have little variation between the values measured every day, but since a non-negligible level of variations may be generated gradually depending on the Earth's orbital cycle, as described above, it is preferable to create the momentum dump amount database with the momentum dump amount measured for every dump cycle. As described above, the predetermined momentum dump amount database may be used, for example, by selecting and applying an appropriate momentum dump amount constant value for each date or period from the momentum dump amount database.

Without the concept of the momentum dump in the present disclosure, when the satellite is operated to dump the momentum as much as the momentum dump amount of the known 1 dump cycle amount according to a predetermined dump cycle, the conventional satellite momentum management process will be described in more detail below.

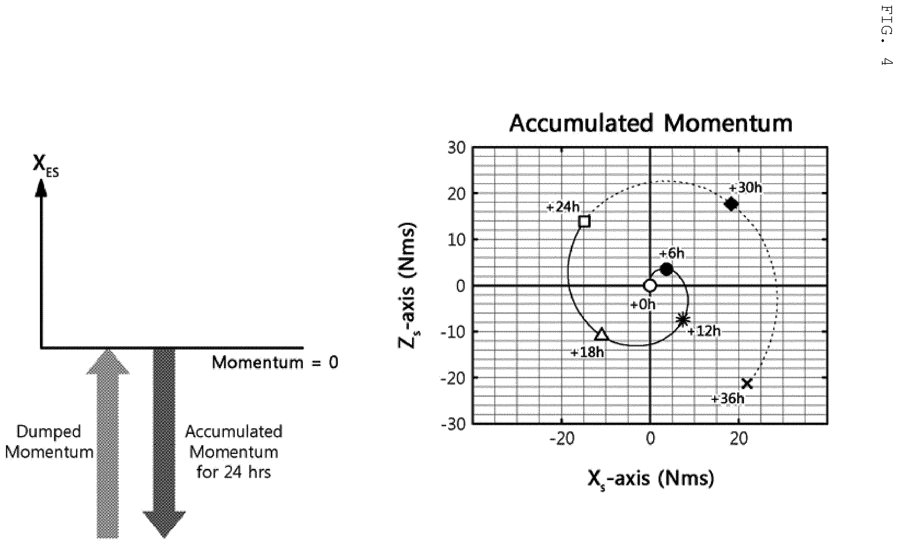

The momentum as much as the momentum dump amount is dumped from the reaction wheel every 1 dump cycle, and the stored momentum becomes zero. FIG. 4 illustrates the conventional momentum dump method and the momentum stored in the reaction wheel, in the satellite that performs the momentum dump with 24 hours as 1 dump cycle. As indicated by a light arrow (dumped momentum) in the graph on the left of FIG. 4, when the momentum as much as the momentum dump amount is dumped without applying a momentum offset (that is, momentum offset = 0), the amount of momentum stored in the reaction wheel becomes zero (momentum = 0). A dark arrow (accumulated Momentum for 24 hrs) indicates the momentum that is again accumulated for 24 hours (1 dump cycle), and is the same amount as the momentum dump amount indicated by the light arrow.

The right of FIG. 4 is a graph illustrating an aspect, in which the momentum is accumulated and stored in the reaction wheel, in a fuselage coordinate system of the satellite rotating in a cycle of 24 hours. As illustrated, immediately after the momentum dump is performed (+0h after the dump) (since the momentum dump was completed in the previous cycle), it can be seen that the momentum stored in the reaction wheel is 0 and is gradually accumulated with the passage of time, and thus, the amount stored increases. In this case, since the fuselage of the satellite always faces the earth as illustrated in FIG. 1, the satellite rotates in a cycle of 24 hours, and thus, the stored momentum increases in a spiral shape. Normally, since 1 dump cycle is 24 hours, up to +24h is shown in a solid line after the dump is performed, but up to +36h is shown in a dotted line assuming that the momentum dump may not be performed due to the unexpected reasons (for example, performing an urgent satellite mission outside the schedule).

As described above, even for a satellite that is designed and operated well to perform the momentum dump in a certain cycle, when the situation in which the urgent and high-priority mission performance is required lasts for an unexpectedly long time (since the momentum dump should not be performed during the mission performance), there is always the possibility that the momentum is accumulated for more than 24 hours. It would be nice if the momentum capacity of the reaction wheel could be designed sufficiently to prepare for such a case, but as the momentum capacity increases, the problem arises that the weight and size also increase.

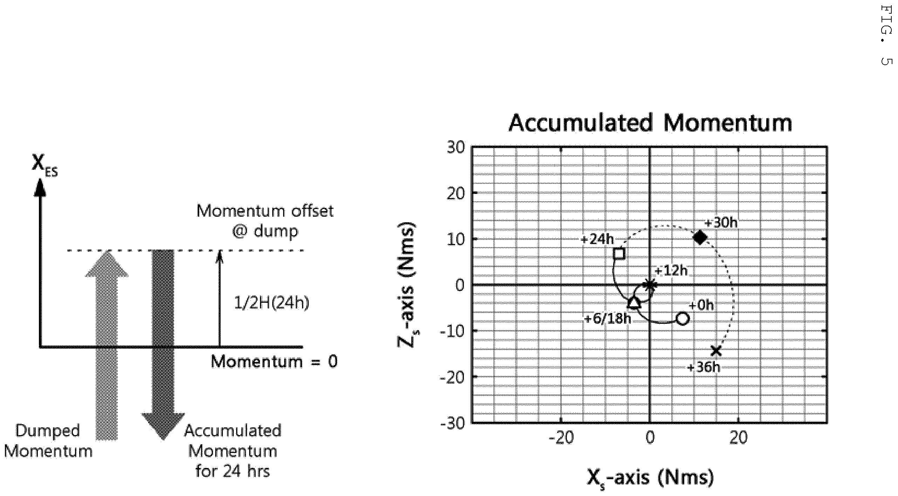

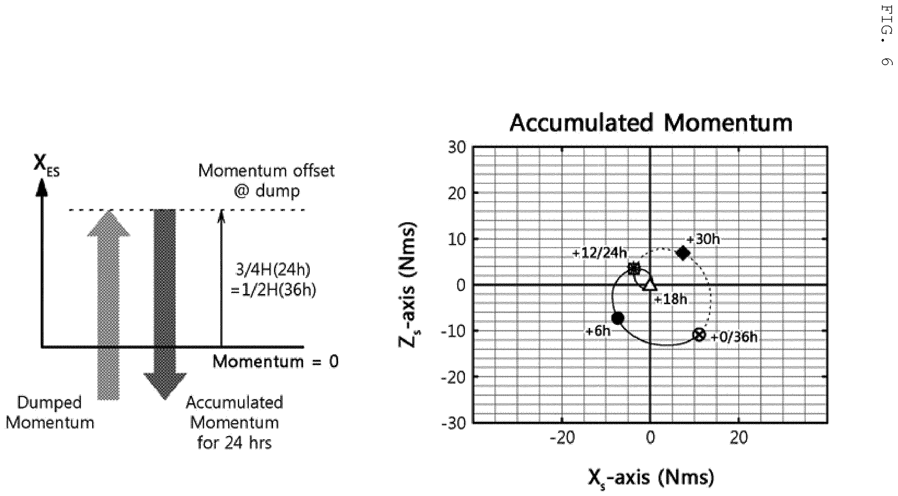

In the present disclosure, the improved momentum dump method for a satellite reaction wheel is proposed so that the satellite may be operated more safely and efficiently by applying an appropriate offset to the originally designed momentum dump management. First, a specific embodiment will be described with reference to FIGS. 5 and 6, and the momentum dump method for a satellite reaction wheel of the present disclosure will be described more generally with reference to FIGS. 5 and 6.

FIG. 5 is a diagram illustrating a momentum dump method and momentum stored in a reaction wheel according to a first embodiment of the present disclosure. As in the description of FIG. 4, in a satellite that performs momentum dump with 24 hours as 1 dump cycle, in the first embodiment, as illustrated in the left of FIG. 5, the momentum is dumped so as to have a momentum offset of 12 hours (1/2 cycle) in a direction opposite to the direction in which the momentum is accumulated. The momentum is again accumulated in the reaction wheel of the satellite for 1 cycle from immediately after the dump, but since the momentum offset of a 1/2 cycle amount is applied, the magnitude of the momentum stored in the reaction wheel of the satellite even after 1 cycle does not exceed a 1/2 cycle amount.

The right of FIG. 5 is a graph illustrating an aspect, in which the momentum is accumulated and stored, in the fuselage coordinate system of the satellite rotating in a cycle of 24 hours. As illustrated, at lapse of +0h after the dump, the momentum offset generated in the previous cycle, so the stored momentum is not 0 but has a value corresponding to the momentum offset. When the momentum is accumulated in the reaction wheel in this state, it can be seen that the storage momentum becomes 0 when 12 hours have elapsed (+12h) after the dump, and then, the stored amount increases again. The right of FIG. 5 also illustrates the stored amount to a 36th hour beyond 24 hours, and it can be seen that the amount of momentum that the reaction wheel needs to store significantly decreases when compared with the right of FIG. 4 at a 24th hour (24h), a 36th hour (36h), or the like.

FIG. 6 is a diagram illustrating a momentum dump method and momentum stored in a reaction wheel according to a second embodiment of the present disclosure. Also, as in the description of FIG. 4, in the satellite that performs the momentum dump with 24 hours as 1 dump cycle, in the second embodiment, the amount of momentum that the reaction wheel needs to store to prepare for the case where the dump may not be performed for 36 hours is to be minimized. As illustrated in the left of FIG. 6, the momentum is dumped by applying a momentum offset of 18 hours (3/4 cycle), which is half of 36 hours, in a direction opposite to the direction in which the momentum is accumulated. When 18 hours (3/4 cycle) after the dump lapses, the momentum stored in the reaction wheel becomes 0, and after 24 hours (1 cycle), the momentum of 1/4 cycle is stored. When the dump is not performed after 24 hours (1 cycle), and thus, 36 hours lapse, the magnitude of the momentum stored in the reaction wheel corresponds to 3/4 of the accumulated amount of 1 cycle. That is, the momentum may be accumulated without performing the dump for 36 hours (1.5 cycles) by using momentum capacity corresponding to 3/4 accumulated for 24 hours (1 cycle).

The right of FIG. 6 is a graph illustrating an aspect, in which the momentum is accumulated and stored in the reaction wheel, in the fuselage coordinate system of the satellite rotating in a cycle of 24 hours. As in the right of FIG. 5 (the first embodiment), at lapse of +0h after the dump, the value corresponding to the momentum offset is provided, but the momentum offset value is larger than that in the first embodiment. When the momentum is accumulated in the reaction wheel in this state, it can be seen that the storage momentum becomes 0 at a 18th hour (18h), and then, the stored amount increases again. When compared with the right drawings of FIGS. 4 and 5 at a 24th hour (24h), a 36th hour (36h), etc., compared to the original operation method, when the dump may not be performed for 36 hours, it can be seen that the stored amount of momentum much more decreases than the first embodiment.

As described above, in the present disclosure, as illustrated in the first and second embodiments, an appropriate amount of momentum offset is generated in the direction opposite to the direction in which the momentum is accumulated. To describe the momentum dump method for a satellite reaction wheel of the present disclosure in more detail, the present disclosure may include an offset application request step and an offset momentum dump step.

In the offset application request step, the offset application is requested when the momentum is dumped to the satellite. As described above, the basic premise is that the satellite is typically operated to dump the momentum as much as the known momentum dump amount according to a predetermined dump cycle. That is, the dump cycle, the momentum dump amount, and the like are predetermined or previously measured based on such a normal operation, and thus, known. In this state, for example, when the situations in which there is a need to perform satellite missions for a time longer than 1 dump cycle, it is necessary to reduce the burden on the reaction wheel, or the like occur, the offset application request step is performed so that the satellite is ready to apply the offset.

In the offset momentum dump step, the momentum as much as the predetermined offset dump amount is dumped from the reaction wheel to generate the momentum offset in a direction opposite to the direction in which the momentum is accumulated. In this case, the offset dump amount is determined as a value smaller than the momentum dump amount. In normal operation, when the momentum is dumped after 1 dump cycle, the accumulated momentum becomes 0, whereas when the offset momentum dump step is performed, the momentum offset is generated in the direction opposite to the direction in which the momentum is accumulated. For example, in the first embodiment described above, as the momentum offset, momentum for 12 hours is generated, and in the second embodiment, momentum for 18 hours is generated.

In addition, the offset-applied momentum dump method for a satellite reaction wheel may be applied during a first operation of the satellite, or may be applied during a normal operation of the satellite.

First, when the momentum dump method of the present disclosure is applied to a satellite that intends to go into orbit and start operation during the first operation of the satellite, a step of making the momentum stored in the reaction wheel become 0 by performing initial setting to start the operation of the satellite on the orbit, the offset application request step, and the offset momentum dump step may be sequentially performed. By doing so, the momentum offset has been already generated in the reaction wheel in the first state, and in this state, the satellite may be operated to dump the momentum as much as the known momentum dump amount according to the predetermined dump cycle.

In the above simple example, conventionally, when the momentum accumulated in the reaction wheel for 1 dump cycle is 10, it is described that a momentum of [0 to 10] is stored in the reaction wheel while an operating time is [0 to 1 dump cycle]. In this case, in the present disclosure, the momentum already stored in the reaction wheel in the initial state may be -5 (by the momentum offset) due to the execution of the steps as described above. Then, the satellite to which the momentum dump method of the present disclosure is applied may be operated so that the momentum of [-5 to 5] is stored in the reaction wheel while the operating time is [0 to 1 dump cycle] from the beginning.

Alternatively, when the momentum dump method of the present disclosure is applied to the satellite in the normal operation of the satellite, that is, the operation to dump the momentum as much as the known momentum dump amount according to the predetermined dump cycle, the offset application request step, a step in which 1 dump cycle being performed at a time when the offset application request step is performed is completed, and thus, the momentum as much as the momentum dump amount is dumped from the reaction wheel so that the stored momentum becomes 0, and the offset momentum dump step may be sequentially performed. By doing so, the momentum offset has been already generated in the reaction wheel immediately before the next 1 dump cycle starts, and in this state, the satellite is operated to dump the momentum as much as the known momentum dump amount according to the predetermined dump cycle.

According to the original normal operation, the accumulated momentum of [0 to 10] is generated in the reaction wheel while the operating time is [0 to 1 dump cycle], so the storage momentum of the reaction wheel becomes 0 immediately after 1 dump cycle. However, in this case, the momentum offset is generated immediately, so the storage momentum of the reaction wheel may be -5 immediately before the next 1 dump cycle starts. Then, the satellite to which the momentum dump method of the present disclosure is applied may be operated so that the momentum of [-5 to 5] is stored in the reaction wheel while the operating time is [0 to 1 dump cycle] after the offset application request step.

In this way, when the offset momentum dump step is performed, since a sufficient momentum offset is generated, the long-term satellite mission performance step in which the satellite mission is performed without momentum dump for 1 dump cycle or longer time may be performed. Specifically describing, by generating the momentum offset in this way, the satellite mission may be performed for a time period of 1 dump cycle or more, and the amount of momentum stored in the reaction wheel may be significantly reduced compared to the conventional one, even if the satellite mission is performed only for one dump cycle time as before in terms of time.

As a specific example, in the case of the first embodiment, when 1 dump cycle is 24 hours and the long-term satellite mission performance period is 24 hours, the momentum offset may be determined as a value corresponding to the accumulated momentum amount due to solar radiation pressure for a 1/2 long-term satellite mission performance period, that is, 12 hours. In this case, since the operation itself in which the momentum dump is generated is the same as in the related art, it can be seen that it is operated as in the related art in terms of time, but as confirmed by the storage momentum graphs of FIGS. 4 (conventional) and 5 (first embodiment), the amount of momentum stored in the reaction wheel significantly decreases, which significantly reduces the load on the reaction wheel.

As a specific example, in the case of the second embodiment, when 1 dump cycle is 24 hours and the long-term satellite mission performance period is 36 hours, the momentum offset may be determined as a value corresponding to the accumulated momentum amount due to solar radiation pressure for a 1/2 long-term satellite mission performance period, that is, 18 hours. In this case, the long-term satellite mission performance step may be more reliably continued for a longer period of time compared to the related art, and when viewed from the storage momentum graphs of FIG. 4 (conventional) and FIG. 6 (second embodiment), it is confirmed that, after 36 hours of operation without momentum dump for a longer period of time, the stored amount of momentum is much smaller than before.

As confirmed in the first and second embodiments, the stored amount of momentum after 1 dump cycle (24 hours in the case of the embodiments) has elapsed is naturally smaller than the accumulated amount of momentum of 1 dump cycle during normal operation, and the stored amount of momentum after a longer period of time (for example, 36 hours) than 1 dump cycle is naturally smaller than the accumulated amount of momentum during the same time during the normal operation, and smaller than the accumulated amount of momentum for 1 dump cycle during the normal operation. As the stored amount of momentum increases, the momentum capacity of the reaction wheel needs to be large enough to smoothly digest the increasing momentum. However, by using the present disclosure, for example, even with the reaction wheel having the momentum capacity sufficient to store the accumulated amount of momentum for 24 hours, even if the momentum is accumulated for 36 hours by applying the offset to the momentum dump as described above, since the actual stored amount is less than the accumulated momentum for 24 hours during the normal operation, the momentum dump may be performed smoothly without any problems such as straining the reaction wheel. In other words, the momentum capacity requirements of the reaction wheel may be greatly alleviated.

The present disclosure is not limited to the abovementioned exemplary embodiments, but may be variously applied. In addition, the present disclosure may be variously modified by those skilled in the art to which the present disclosure pertains without departing from the scope of the present invention defined in the claims.

### [Industrial Applicability]

According to the present disclosure, it is possible to enable safer and more efficient operation of a satellite by applying an appropriate offset to an originally designed momentum dump, and as a result, it is possible to greatly improve efficient operation of the satellite by performing satellite missions without momentum dump for an extended period of time. In addition, according to the present disclosure, it is possible to reduce the weight and cost of the satellite by alleviating the requirements for the momentum capacity of the reaction wheel, and an offset is applied, and thus a less load is applied to the reaction wheel as much to reduce the power consumption and extend the life of the reaction wheel, thereby improving the safety of the satellite.

## Claims

1. A momentum dump method for a satellite reaction wheel operated to dump momentum as much as a known momentum dump amount according to a predetermined dump cycle, **characterised in that** the momentum dump method comprises:
a momentum offset application requesting step in which a momentum offset application is requested during the momentum dump to the satellite; and
an offset momentum dumping step in which the momentum as much as a predetermined momentum offset dump amount is dumped from the reaction wheel to generate a momentum offset in a direction opposite to a direction in which the momentum is accumulated, wherein
the predetermined momentum offset dump amount is determined within a range of greater or equal 50% to less than 100% of the moment dump amount.

2. The momentum dump method of claim 1, wherein the momentum offset dump amount is determined as a value smaller than the momentum dump amount.

3. The momentum dump method of claim 1, wherein, when the momentum dump method for a satellite reaction wheel is applied to the satellite that intends to go into orbit and start an operation,
a step of making the momentum stored in the reaction wheel become 0 by performing initial setting to start the operation of the satellite on the orbit;
the momentum offset application request step; and
the offset momentum dump step
are sequentially performed, so, after a momentum offset is generated in the reaction wheel, the satellite is operated to dump the momentum as much as the known momentum dump amount according to the predetermined dump cycle.

4. The momentum dump method of claim 1, wherein, when the momentum dump method for a satellite reaction wheel is applied to the satellite in operation to dump the momentum as much as the known momentum dump amount according to the predetermined dump cycle,
the momentum offset application request step;
a step in which 1 dump cycle being performed at a time when the momentum offset application request step is performed is completed, and thus, the momentum as much as the momentum dump amount is dumped from the reaction wheel so that the stored momentum becomes 0; and
the offset momentum dump step
are sequentially performed, so, after a momentum offset is generated in the reaction wheel, the satellite is operated to dump the momentum as much as the known momentum dump amount according to the predetermined dump cycle.

5. The momentum dump method of claim 1, including a method of determining the momentum dump amount, and
the method of determining the momentum dump amount operates any one selected from the satellite, another satellite having the same specification as the satellite, or a satellite simulator designed to be equivalent to the satellite to dump the momentum as much as the known momentum dump amount according to the predetermined dump cycle, and
the method of determining the momentum dump amount includes:
a basic momentum accumulation step of accumulating the momentum due to disturbance torque due to solar radiation pressure in the reaction wheel for 1 dump cycle; and
a basic dump amount calculation step of calculating the momentum accumulated in the basic momentum accumulation step as the momentum dump amount or determining a value selected from a predetermined momentum dump amount database as the momentum dump amount.

6. The momentum dump method of claim 1, further comprising a long-term satellite mission performance step of performing the satellite mission without the momentum dump for 1 dump cycle or more after the offset momentum dump step.

7. The momentum dump method of claim 6, wherein, when 1 dump cycle is 24 hours and a long-term satellite mission performance period is 24 hours, the momentum offset is determined as a value corresponding to the accumulated amount of momentum due to solar radiation pressure for a 1/2 long-term satellite mission performance period, that is, 12 hours.

8. The momentum dump method of claim 6, wherein, when 1 dump cycle is 24 hours and a long-term satellite mission performance period is 36 hours, the momentum offset is determined as a value corresponding to the accumulated amount of momentum due to solar radiation pressure for a 1/2 long-term satellite mission performance period, that is, 18 hours.

## Patentansprüche

1. Momentum-Abgabeverfahren für ein Satellitenreaktionsrad, das so betrieben wird, dass es Momentum bis zu einem bekannten Momentum-Abgabebetrag gemäß einem vorbestimmten Abgabezyklus abgibt, **dadurch gekennzeichnet, dass** das Momentum-Abgabeverfahren Folgendes umfasst:
einen Momentum-Offset-Anwendungsanfrageschritt, in dem eine Momentum-Offset-Anwendung während der Momentum-Abgabe an den Satelliten angefordert wird; und
einen Offset-Momentum-Abgabeschritt, bei dem das Momentum bis zu einem vorbestimmten Momentum-Offset-Abgabebetrag von dem Reaktionsrad abgegeben wird, um einen Momentum-Offset in einer Richtung zu erzeugen, die einer Richtung entgegengesetzt ist, in der das Momentum akkumuliert wird,
wobei der vorbestimmte Momentum-Offset-Abgabebetrag innerhalb eines Bereichs von höher oder gleich 50 % bis 100 % des Momentum-Abgabebetrags bestimmt wird.

2. Momentum-Abgabeverfahren nach Anspruch 1, wobei der Momentum-Offset-Abgabebetrag als ein Wert bestimmt wird, der kleiner als der Momentum-Abgabebetrag ist.

3. Momentum-Abgabeverfahren nach Anspruch 1, wobei das Momentum-Abgabeverfahren für ein Satellitenreaktionsrad auf den Satelliten angewandt wird, der in die Umlaufbahn eintreten und eine Operation beginnen will,
ein Schritt zum Setzen des Momentums, das in dem Reaktionsrad gespeichert ist, auf 0, indem die Anfangseinstellung durchgeführt wird, um die Operation des Satelliten auf der Umlaufbahn zu beginnen;
der Momentum-Offset-Anwendungsanfrageschritt; und
der Offset-Momentum-Abgabeschritt nacheinander durchgeführt werden, so dass der Satellit, nachdem ein Momentum-Offset in dem Reaktionsrad erzeugt wurde, so betrieben wird, dass er das Momentum bis zu dem bekannten Momentum-Abgabebetrag gemäß dem vorbestimmten Abgabezyklus abgibt.

4. Momentum-Abgabeverfahren nach Anspruch 1, wobei, wenn das Momentum-Abgabeverfahren für ein Satellitenreaktionsrad auf den Satelliten während der Operation angewandt wird, um das Momentum bis zu dem bekannten Momentum-Abgabebetrag gemäß dem vorbestimmten Abgabezyklus abzugeben,
der Momentum-Offset-Anwendungsanfrageschritt;
ein Schritt, bei dem ein Abgabezyklus, der zu einem Zeitpunkt durchgeführt wird, zu dem der Momentum-Offset-Anwendungsanfrageschritt durchgeführt wird, abgeschlossen wird, und somit das Momentum bis zu dem Momentum-Abgabebetrag von dem Reaktionsrad abgegeben wird, so dass das gespeicherte Momentum 0 wird; und
der Offset-Momentum-Abgabeschritt nacheinander durchgeführt werden, so dass der Satellit, nachdem ein Momentum-Offset in dem Reaktionsrad erzeugt wurde, so betrieben wird, dass er das Momentum bis zu dem bekannten Momentum-Abgabebetrag gemäß dem vorbestimmten Abgabezyklus abgibt.

5. Momentum-Abgabeverfahren nach Anspruch 1, das ein Verfahren zum Bestimmen des Momentum-Abgabebetrags beinhaltet, und
das Verfahren zum Bestimmen des Momentum-Abgabebetrags einen beliebig ausgewählten von dem Satelliten, einem anderen Satelliten mit denselben Spezifikationen wie der Satellit oder einem Satellitensimulator, der so konstruiert ist, dass er dem Satelliten gleichwertig ist, so betreibt, dass das Momentum bis zu dem bekannten Momentum-Abgabebetrag gemäß dem vorbestimmten Abgabezyklus abgegeben wird, und
das Verfahren zum Bestimmen des Momentum-Abgabebetrags Folgendes umfasst:
einen Grundmomentum-Akkumulationsschritt zum Akkumulieren des Momentums aufgrund des Störmoments durch den Druck der Sonnenstrahlung in dem Reaktionsrad für einen Abgabezyklus; und
einen Grundabgabebetrag-Berechnungsschritt zum Berechnen des Momentums, das in dem Grundmomentum-Akkumulationsschritt als Momentum-Abgabebetrag akkumuliert wurde oder zum Bestimmen eines Wertes, ausgewählt aus einer vorbestimmten Datenbank für den Momentum-Abgabebetrag als der Momentum-Abgabebetrag.

6. Momentum-Abgabeverfahren nach Anspruch 1, ferner umfassend einen Langzeit-Satellitenmissions-Leistungsschritt zum Durchführen der Satellitenmission ohne die Momentum-Abgabe für einen Abgabezyklus oder mehr nach dem Offset-Momentum-Abgabeschritt.

7. Momentum-Abgabeverfahren nach Anspruch 6, wobei, wenn ein Abgabezyklus 24 Stunden beträgt und eine Langzeit-Satellitenmissions-Leistungsperiode 24 Stunden beträgt, das Momentum-Offset als ein Wert bestimmt wird, der dem akkumulierten Momentumbetrag aufgrund des Drucks der Sonnenstrahlung für eine 1/2 Langzeit-Satellitenmissions-Leistungsperiode, also 12 Stunden, entspricht.

8. Momentum-Abgabeverfahren nach Anspruch 6, wobei, wenn ein Abgabezyklus 24 Stunden beträgt und eine Langzeit-Satellitenmissions-Leistungsperiode 36 Stunden beträgt, das Momentum-Offset als ein Wert bestimmt wird, der dem akkumulierten Momentumbetrag aufgrund des Drucks der Sonnenstrahlung für eine 1/2 Langzeit-Satellitenmissions-Leistungsperiode, also 18 Stunden, entspricht.

## Revendications

1. Procédé de désaturation cinétique pour une roue de réaction de satellite actionnée pour une désaturation cinétique jusqu'à une quantité de désaturation cinétique connue selon un cycle de désaturation prédéterminé, **caractérisé en ce que**
le procédé de désaturation cinétique comprend :
une étape de demande d'application de décalage de moment cinétique, dans laquelle une application de décalage de moment cinétique est demandée pendant la désaturation cinétique au satellite ; et
une étape de désaturation cinétique par décalage, dans laquelle le moment cinétique jusqu'à une quantité de désaturation cinétique par décalage prédéterminée est désaturé de la roue de réaction pour générer un décalage de moment cinétique dans une direction opposée à la direction, dans laquelle le moment cinétique est accumulé,
dans lequel la quantité de désaturation cinétique par décalage prédéterminée est déterminée dans une plage supérieure ou égale à 50 % à moins de 100 % de la quantité de désaturation cinétique.

2. Procédé de désaturation cinétique selon la revendication 1, dans lequel la quantité de désaturation cinétique par décalage est déterminée comme une valeur inférieure à la quantité de désaturation cinétique.

3. Procédé de désaturation cinétique selon la revendication 1, dans lequel, lorsque le procédé de désaturation cinétique pour une roue de réaction de satellite est appliqué au satellite qui a l'intention d'entrer en orbite et de démarrer une opération,
une étape permettant de rendre le moment cinétique stocké dans la roue de réaction nul en effectuant un réglage initial pour démarrer l'actionnement du satellite sur l'orbite ;
l'étape de demande d'application de décalage de moment cinétique ; et
l'étape de désaturation cinétique par décalage
sont réalisées de manière séquentielle de sorte qu'après qu'un décalage cinétique a été généré dans la roue de réaction, le satellite est actionné pour désaturer le moment cinétique jusqu'à la quantité de désaturation cinétique connue conformément au cycle de désaturation prédéterminé.

4. Procédé de désaturation cinétique selon la revendication 1, dans lequel, lorsque le procédé de désaturation cinétique pour une roue de réaction de satellite est appliqué au satellite actionné pour désaturer le moment cinétique jusqu'à la quantité de désaturation cinétique connue conformément au cycle de désaturation prédéterminé,
l'étape de demande d'application de décalage de moment cinétique ;
une étape, dans laquelle 1 cycle de désaturation réalisé à un moment lorsque l'étape de demande d'application de décalage de moment cinétique est réalisée, est terminée, et ainsi, le moment cinétique jusqu'à la quantité de désaturation cinétique est désaturé de la roue de réaction de telle sorte que le moment cinétique stocké devient 0 ; et
l'étape de désaturation cinétique par décalage
sont réalisées de manière séquentielle de telle sorte que, après qu'un décalage de moment cinétique a été généré dans la roue de réaction, le satellite est actionné pour désaturer le moment cinétique jusqu'à la quantité de désaturation cinétique connue conformément au cycle de désaturation prédéterminé.

5. Procédé de désaturation cinétique selon la revendication 1, comportant un procédé de détermination de la quantité de désaturation cinétique, et
le procédé de détermination de la quantité de désaturation cinétique actionne un élément sélectionné quelconque du satellite, un autre satellite présentant la même spécification que le satellite, ou d'un simulateur de satellite conçu pour être équivalent au satellite pour désaturer le moment cinétique jusqu'à la quantité de désaturation cinétique connue conformément au cycle de désaturation prédéterminé, et
le procédé de détermination de la quantité de désaturation cinétique comporte :
une étape d'accumulation de moment cinétique de base pour accumuler le moment cinétique dû au couple de perturbation dû à la pression de radiation du soleil dans la roue de réaction pendant 1 cycle de désaturation ; et
une étape de calcul de quantité de désaturation de base pour calculer le moment cinétique accumulé dans l'étape d'accumulation de moment cinétique de base en tant que quantité de désaturation cinétique ou pour déterminer une valeur sélectionnée dans une base de données de quantités de désaturation de moment cinétique prédéterminées en tant que la quantité de désaturation cinétique.

6. Procédé de désaturation cinétique selon la revendication 1, comprenant en outre une étape de réalisation de mission de satellite à long terme pour réaliser la mission de satellite sans désaturation cinétique pendant 1 cycle de désaturation ou plus après l'étape de désaturation cinétique par décalage.

7. Procédé de désaturation cinétique selon la revendication 6, dans lequel, lorsque 1 cycle de désaturation est de 24 heures et qu'une période de réalisation de mission de satellite à long terme est de 24 heures, le décalage de moment cinétique est déterminé comme une valeur correspondant à la quantité accumulée de moment cinétique due à la pression de radiation du soleil pendant une ½ période de réalisation de mission de satellite à long terme, qui est de 12 heures.

8. Procédé de désaturation cinétique selon la revendication 6, dans lequel, lorsque 1 cycle de désaturation est de 24 heures et qu'une période de réalisation de mission de satellite à long terme est de 36 heures, le décalage de moment cinétique est déterminé comme une valeur correspondant à la quantité accumulée de moment cinétique due à la pression de radiation du soleil pendant une 1/2 période de réalisation de mission de satellite à long terme, qui est de 18 heures.
